# EUROPÄISCHE PATENTANMELDUNG

(11) **EP 2 399 723 A1**
(43) Veröffentlichungstag der Anmeldung: **28.12.2011**
(21) Anmeldenummer: 10405122.2
(22) Anmeldetag: 24.06.2010
(51) Int. Cl.: B29C 65/02, B65D 77/20, B65D 75/20, B65D 75/30, B29K 67/00, B29K 23/00, B29K 77/00, B29C 59/00

(54) **Verpackungsbehälter**

(71) Anmelder: Amcor Flexibles Kreuzlingen Ltd., 8280 Kreuzlingen (CH)
(72) Erfinder: Ménard, Rico, 9533 Kirchberg (CH); Pietzsch, Joachim, 78244 Gottmadingen (DE)
(74) Vertreter: Burkhart, Hans

(57) **Zusammenfassung**

Bei einem Verpackungsbehälter mit wenigstens einem wenigstens drei Polymerschichten einschliesslich einer Siegelschicht (16 A, 16 B) aufweisenden Verpackungslaminat (10 A, 10 B) mit einer die Innenseite des Behälters bildenden Innenschicht (12 A, 12 B) und einer die Aussenseite des Behälters bildenden Aussenschicht (14 A, 14 B) ist das Verpackungslaminat über wenigstens eine Siegelnaht (22) gegen sich selbst oder gegen ein weiteres Verpackungslaminat zu einem Beutel gesiegelt oder als Deckel gegen einen Rand eines aus einem Verpackungslaminat geformten Behälterteils gesiegelt. Die Innenschicht (12 A, 12 B) ist aus einem unter den Siegelbedingungen thermisch stabilen Polymer und die auf die Innenschicht (12 A, 12 B) folgende Schicht ist die aus einem unter den Siegelbedingungen thermisch siegelbaren Polymer bestehende Siegelschicht (16 A, 16 B), wobei die in der Siegelnaht (22) einander gegenüberliegenden Innenschichten (12 A, 12 B) im Bereich der Siegelnaht (22) lokal geschwächt oder durchtrennt sind.

## Beschreibung

Die Erfindung betrifft einen Verpackungsbehälter mit einem wenigstens drei Polymerschichten einschliesslich einer Siegelschicht aufweisenden Verpackungslaminat mit einer die Innenseite des Behälters bildenden Innenschicht und einer die Aussenseite des Behälters bildenden Aussenschicht, wobei das Verpackungslaminat über wenigstens eine Siegelnaht gegen sich selbst oder gegen ein weiteres Verpackungslaminat zu einem Beutel gesiegelt oder als Deckel gegen einen Rand eines aus einem Verpackungslaminat geformten Behälterteils gesiegelt ist.

Schon lange wird nach Lösungen gesucht, für die Verpackung von Wasser die heute üblichen Flaschen aus Polyethylenterephthalat (PET) durch leichtere und billigere flexible Folienbeutel zu ersetzen, ohne jedoch die hervorragenden organoleptischen Eigenschaften von PET zu verlieren.

Die heute üblichen, die Innenseite eines Folienbeutels bildenden Siegelschichten aus Polyethylen (PE) oder Polypropylen (PP) können zu nicht akzeptablen Geschmacksbeeinträchtigungen des Füllguts führen. So nimmt beispielsweise Wasser migrierende Bestandteile, die aus der Siegelschicht, aber auch aus weiter aussen liegenden Kleberschichten eines Folienlaminats oder aus Druckfarben stammen, auf.

Da PET bei den zur Herstellung von Beuteln üblicherweise angewendeten Siegeltemperaturen thermisch nicht siegelbar ist, sind in der Vergangenheit grosse Anstrengungen unternommen worden, ein möglichst geschmacksneutrales PE als Siegelmedium zu finden, um den sehr strengen Anforderungen an die Wasserreinheit gerecht zu werden, bisher allerdings mit beschränktem Erfolg. Zahlreiche Wasseranbieter wünschen sich demnach flexible Verpackungen, z.B. als Beutel, deren Innenseite die Migration von unerwünschten Nebenprodukten der verwendeten Rohstoffe der Verpackungsbestandteile ebenso wirksam wie bei PET-Flaschen unterdrückt.

Der Erfindung liegt die Aufgabe zugrunde, einen Verpackungsbehälter der eingangs genannten Art zu schaffen, der die hervorragenden organoleptischen Eigenschaften von PET-Flaschen besitzt, jedoch wesentlich leichter und billiger ist.

Zur erfindungsgemässen Lösung der Aufgabe führt, dass die Innenschicht aus einem unter den Siegelbedingungen thermisch stabilen Polymer und die auf die Innenschicht folgende Schicht die aus einem unter den Siegelbedingungen thermisch siegelbaren Polymer bestehende Siegelschicht ist, wobei die in der Siegelnaht einander gegenüberliegenden Innenschichten im Bereich der Siegelnaht lokal geschwächt oder durchtrennt sind.

Das Polymer der Innenschicht ist bevorzugt thermisch bis über etwa 200°C stabil und das Polymer der Siegelschicht bevorzugt unterhalb von etwa 180°C thermisch siegelbar. Das Polymer der Innenschicht ist bevorzugt PET, kann aber z. B. auch PEN, PEEK oder oPA sein. Das Polymer der Siegelschicht ist bevorzugt PE, kann aber z. B. auch PP, ein Copolymer der Polyolefine, oder PET-G sein.

Zwischen der Innenschicht und der Siegelschicht kann eine funktionelle Barriereschicht, insbesondere aus SiOₓ oder AIOₓ, eine Aluminiumfolie oder eine Metallisierungsschicht angeordnet sein.

Die Herstellung eines Laminats mit der Struktur PET : PE : PET wird entweder durch Extrusionskaschierung oder durch Verwendung von geeigneten Klebern hergestellt und eine der PET-Schichten, die später die Innenseite des zu bildenden Beutels bildet, wird mechanisch oder mit Hilfe eines Lasers entlang der zu siegelnden Bereiche durch eine oder mehrere feine linienförmige Schnitte durchtrennt, so dass eine Sollbruchstelle in der PET-Schicht entsteht. Fügt man nun zwei auf diese Weise vorbereitete Filme so zusammen, dass die durchtrennten PET-Schichten gegeneinander weisen, und wird entlang dieser Bereiche thermisch oder mit Hilfe von Ultraschall-Schweissgeräten gesiegelt, so schmilzt das innen liegende PE auf und wird aufgrund des Siegeldrucks durch die linienförmigen Trennstellen in den Bereich zwischen den zwei Laminaten gepresst und bildet dort eine dichte und feste Siegelnaht. Auf diese Weise können Beutel aus flexiblen Verbunden hergestellt werden, die als Innenseite eine PET-Schicht aufweisen und sich demnach organoleptisch ebenso vorteilhaft wie PET-Flaschen verhalten.

Eine 0.5 Liter PET-Flasche wiegt in der Regel ca. 15 bis 18 g, während dieselbe Wassermenge in einem Beutel verpackt werden kann, der lediglich 3 bis 4 g wiegt, was zu einer erheblichen Materialeinsparung führt und demnach aus umweltfreundlicher Sicht vorteilhaft ist.

Selbstverständlich beschränken sich die hier beschriebenen Verpackungsbehälter nicht nur auf die Verpackung von Wasser, sondern sind ganz allgemein zur Verpackung anderer flüssiger, pastöser oder auch fester Füllgüter geeignet, insbesondere, wenn grosser Wert auf praktische Migrationsfreiheit zwischen Verpackung und Füllgut und demzufolge auf geschmacksneutrale Einzelpackungen Wert gelegt wird. In Frage kommen also auch Beutelverpackungen für Säfte, Milchprodukte, Condiments, Suppen, alkoholische Getränke, Kaffee, Saucen, aber auch pulvrige, stückige oder pastöse Lebensmittel, sowie pharmazeutische oder Non-Food Produkte.

Neben Beuteln umfassen die erfindungsgemässen Verpackungsbehälter auch Verpackungen bestehend aus Bechern oder tiefgezogenen Schalen, die mit einem aufgesiegelten Deckel verschlossen werden. Dabei ist die produktberührende Seite der Schale und der Deckel beispielsweise mit einer PET-Schicht ausgeführt, die wie beschrieben mechanisch oder mit Hilfe eines Lasers entlang den zu siegelnden Bereichen so geschwächt wird, dass beim Siegeln das darunter liegende Siegelmedium nach Aufschmelzen durch diese Sollbruchstellen fliessen kann, um so dichte Nähte zu bilden.

Ein weiterer Vorteil der hier beschriebenen Strukturen ist darin zu sehen, dass bei Laminataufbauten wie PET : PE : PET die Materialien mit hohen E-Moduli die Aussenseiten des Laminats bilden und die Strukturen deshalb besonders steif sind. Demnach kann durch diese Art von Aufbauten eine extrem steife und somit gut aufrecht stehende Verpackung mit sehr wenig Material hergestellt werden. Dieser Sachverhalt kann mit folgendem Beispiel veranschaulicht werden: Bei E-Moduli von 4500 MPa für PET und 500 MPa für PE ergibt sich für ein übliches Laminat PET 24 µm / Kleber 3 µm / PE 100 µm eine Biegesteifigkeit von 210 mN * cm². Dieselbe Steifigkeit kann durch ein erfindungsgemässes, durch Extrusions- oder kleberbasierte Kaschierung hergestelltes Laminat der Struktur PET 12 µm : PE 70 µm : PET 12 µm erreicht werden, was einer Reduktion des benötigten PE von 30 % entspricht. Andererseits kann mit einem Laminat PET 12 µm : PE 100 µm : PET 12 µm eine Steifigkeit von 396 mN*cm² erreicht werden, entsprechend einer Steigerung von 89 %, d.h. fast doppelte Steifigkeit bei gleichem Materialeinsatz.

Beispiele für erfindungsgemässe Laminate sind:
PET / Druck / Kleber / Alu / Primer / PE extrudiert / PET (Innenseite)
oPP / Druck / Kleber / PET SiOx / Primer / PE extrudiert / PET (Innenseite)
PET / Druck / Kleber / / PET SiOx / Primer / PE extrudiert / PET (Innenseite) PET SiOx / Druck / PE extrudiert / PET (Innenseite)
PET SiOx / Druck / Kleber / oPA / tie : PE : tie (coextrudiert) / PET(Innenseite)
tie = Haftvermittler (Primer)

Alternativ zur Extrusionskaschierung können die beteiligten Schichten auch mit herkömmlichen Klebern verbunden werden, also z. B.
PET / Druck / Kleber / Alu / Kleber / PE / Kleber / PET (Innenseite) oder
oPP / Druck / Kleber / PET SiOx / Kleber / PET (Innenseite), wobei dann der Einsatz von Primern entfällt.

Als besonders vorteilhaft haben sich Laminate erwiesen, bei denen die innenliegende PET-Schicht metallisiert, mit SiOₓ oder mit AIOₓ beschichtet ist, so dass eine funktionelle Barriereschicht nahe am Füllgut entsteht,
z.B. oPP / Druck / Kleber / PE / Kleber / SiOx PET (Innenseite) oder
oPP / Druck / Kleber / PE / Kleber / met- PET (Innenseite)

Im Wesentlichen kommen alle heute üblichen Mehrschichtlaminate in Frage, wobei die üblicherweise innen liegende Siegelschicht durch eine erfindungsgemäss entlang der zu siegelnden Bereiche mechanisch oder mit Hilfe eines Lasers durchtrennte PET-Schicht ersetzt ist. Als nächste, der durchtrennten PET-Schicht angrenzende Schicht ist ein thermisch oder mit Ultraschall gut siegelbares Medium angeordnet, Materialien also, wie sie bei herkömmlichen Laminaten als Siegelschichten zum Einsatz kommen.

Für den Einsatz von Lasern zur Erzeugung der perforierten Linien haben sich Aufbauten als besonders geeignet erwiesen, die entweder zwischen der Siegelschicht und den weiter aussen liegenden Schichten eine für den Laser unüberwindbare Schicht aufweisen, wie z. B. eine Aluminiumfolie oder ein metallisierter Film. Eine andere Möglichkeit ist die Anordnung einer äussersten Schicht aus z.B. orientiertem Polypropylen (oPP), die von einem Laserstrahl nicht geschwächt wird.

Das bevorzugte Material für die Innenschicht des erfindungsgemässen Verpackungslaminates ist PET. Andere, für die innerste Schicht geeignete Materialien sind thermisch bis über etwa 200 °C stabile Polymere, wie z. B. Polyethylennaphthalat (PEN), Polyetheretherketon (PEEK) oder orientiertes Polyamid (oPA).

Das bevorzugte Polymer für die Siegelschicht ist PE, jedoch sind auch andere Medien möglich, die unterhalb von z.B. 180°C thermisch siegelbar sind, wie z.B. PP, Copolymere der Polyolefine, insbesondere Copolymere von PE und PP, oder PET-G.

Wesentlich für die Funktion der erfindungsgemässen Laminate ist eine gute Barriereeigenschaft der innersten Schicht, so dass möglichst keine Migranten von weiter aussen liegenden Schichten, Farben oder Klebern ins Innere des Verpackungsbehälters und somit ins Füllgut gelangen können. Dieses produktberührende Material soll selbstverständlich selbst auch möglichst geschmacksneutral und frei von migrierenden Bestandteilen sein.

Das eigentliche Siegelmedium, das bei den erfindungsgemäss eingesetzten Verpackungslaminaten die zweite Schicht von Innen darstellt, muss die Siegelbarkeit bei Temperaturen deutlich unterhalb der Schmelztemperatur des Materials der innersten Schicht liegen. Unter dem Druck der Siegelwerkzeuge muss dieses Medium die geschwächte Innenschicht genügend durchströmen und sich gut mit dem Polymer der Siegelschicht des gegenüberliegenden Laminats verbinden. Versuche haben gezeigt, dass dies für alle herkömmlichen Siegelmedien der Fall ist.

Selbstverständlich soll auch das Siegelmedium möglichst wenig migrationsfähige Bestandteile aufweisen, da das Füllgut theoretisch mit dem Siegelwulst entlang der Nähte auch mit diesem Material in direkten Kontakt kommt.

Beispielsweise ist bei einem Vierrandsiegelbeutel mit den Abmessungen 10 cm * 15 cm im herkömmlichen Fall die Kontaktfläche des Siegelmaterials PE zum Füllgut 300 cm².

Bei einem entsprechenden erfindungsgemässen Beutel mit denselben Abmessungen ist ein Kontakt zwischen Füllgut und Siegelmaterial nur entlang der Siegelnaht möglich. Ist dieser Wulst aus Siegelmaterial entlang der Siegelnaht z.B. 100 µm breit, so entspricht dies einer Kontaktfläche von lediglich 0.5 cm², also nur 0.17 % im Vergleich zum klassischen Vierrandsiegelbeutel.

Aufgrund der sehr kleine Kontaktfläche zwischen Siegelmedium und Füllgut und der Tatsache, dass PET sehr gut gegen migrierende Bestandteile aus PE oder anderen Siegelmedien, Klebern und/oder Farben sperrt, wird das verpackte Gut also nur in extrem reduzierter Weise mit migrierenden Bestandteilen der Verpackung belastet. Gerade für sensorisch diffizile Füllgüter, wie z.B. Wasser, aber auch für alle anderen, weniger heiklen Füllgüter, wie z.B. Süssgetränke, Kaffee, Suppen etc., darf beim erfindungsgemässen Verpackungsbehälter von einer deutlich reduzierten Belastung des Füllgutes durch unerwünschte Migranten ausgegangen werden, so dass das verpackte Gut seinen Geschmack nicht verändern wird.

Der erfindungsgemässe Verpackungsbehälter wird deshalb bevorzugt dann eingesetzt, wenn das Füllgut nicht nur von äusseren Einflüssen, sondern auch von allen in der Verpackung selbst enthaltenen, migrierenden Bestandteilen geschützt werden soll.

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: einen Querschnitt durch zwei gegeneinander zu siegelnde, erfindungsgemässe Verpackungslaminate;
- Fig. 2: den Querschnitt von Fig. 1 nach erfolgter Siegelung;
- Fig. 3 a-c: eine Draufsicht auf verschiedene Trennlinienelemente der einander im Siegelbereich gegenüberliegenden Innenschichten der Verpackungslaminate von Fig. 1;

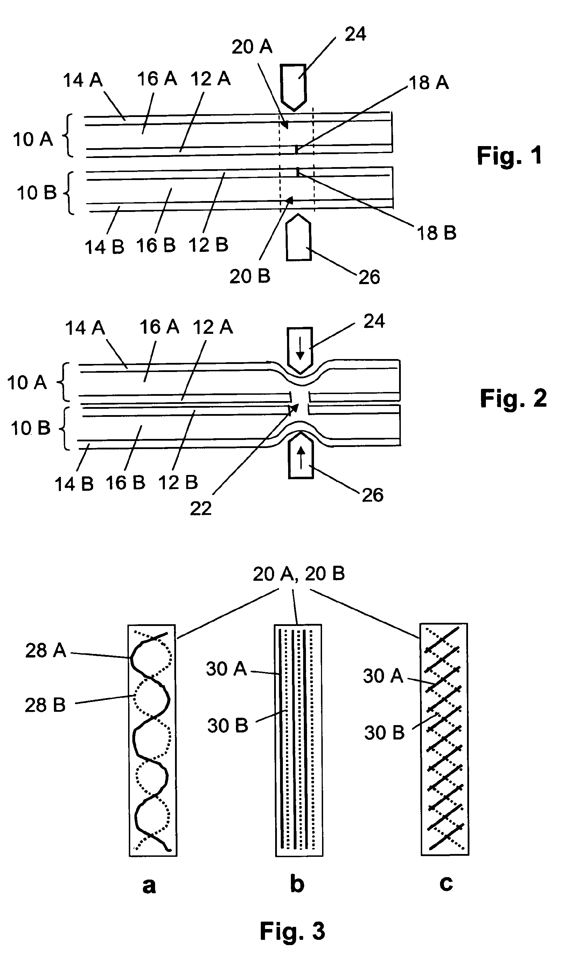

Die Figuren 1 und 2 zeigen zwei Verpackungslaminate 10 A, 10 B in einem Siegelbereich 20 A, 20 B vor dem Verbinden über eine Siegelnaht 22. Die beiden Verpackungslaminate 10 A, 10 B weisen eine Innenschicht 12 A, 12 B, eine Aussenschicht 14 A, 14 B und eine zwischen diesen angeordnete Siegelschicht 16 A, 16 B auf. Die Bezeichnungen Innenschicht und Aussenschicht der Verpackungslaminate beziehen sich auf die Anordnung in einem aus den Laminaten hergestellten Verpackungsbehälter, wobei die Innenschicht die Innenseite und die Aussenschicht die Aussenseite des Verpackungsbehälters bildet.

Die Innenschichten 12 A, 12 B der durch Anbringen einer gemeinsamen Siegelnaht 22 miteinander zu verbindenden Verpackungslaminate 10 A, 10 B sind in einem hierzu vorgesehenen Siegelbereich 20 A, 20 B unter Bildung von schlitzförmigen Öffnungen 18 A, 18 B lokal durchtrennt. Anstelle einer vollständigen Durchtrennung der Innenschichten 12 A, 12 B kann auch eine Schwächung vorgesehen sein, die erst unter dem Siegeldruck reisst und zu einer Durchtrennung führt.

Die durch Heisssiegeln oder mittels Ultraschallsiegelung miteinander zu verbindenden Verpackungslaminate 10 A, 10B werden so aufeinander gelegt, dass die mit den schlitzförmigen Öffnungen 18 A, 18 B ausgestatteten Siegelbereiche 20 A, 20 B der Innenschichten 12 A, 12 B vor dem Herstellen der Siegelnaht 22 möglichst deckungsgleich aufeinander liegen.

Die derart aufeinander ausgerichteten Verpackungslaminate 10 A, 10 B werden in einem beheizten Siegelwerkzeug 24, 26 unter Anwendung von Druck und Temperatur unter Bildung der Siegelnaht 22 miteinander verbunden. Bei der Herstellung der Siegelnaht 22 weichen die durchtrennten Innenschichten 12 A, 12 B unter dem Druck der Siegelwerkzeuge 24, 26 und der schmelzenden und durch die Öffnungen 18 A, 18 B in den Innenschichten 12 A, 12 B austretenden und sich miteinander vermischenden Polymermassen der Siegelschichten 16 A, 16 B lokal nach aussen aus. Die sich miteinander vermischenden Polymermassen der Siegelschichten 16 A, 16 B bilden die Siegelnaht 22.

Eine gute Trennfestigkeit der Siegelnaht 22 und deren Dichtheit bezüglich eines Flüssigkeitsdurchtritts wird massgeblich von der Breite und der Kontinuität der der durch die miteinander verschmelzenden Polymermassen der Siegelschichten 16 A, 16 B gebildeten Siegelnaht 22 bestimmt. Da unter Produktionsbedingungen bei der Überlappung der Siegelbereiche 20 A, 20 B der miteinander zu verbindenden Verpackungslaminate 10 A, 10 B mit eine gewissen Abweichungstoleranz hingenommen werden muss und demzufolge die Siegelbereiche 20 A, 20 B nicht immer deckungsgleich aufeinander liegen, kann es sich als vorteilhaft erweisen, die schlitzförmigen Öffnungen 18 A, 18 B in den Innenschichten 12 A, 12 B so anzuordnen, dass diese sich bei nicht deckungsgleichem Überlappen der Siegelbereiche 20 A, 20 B zumindest teilweise überschneiden oder eine von einer deckungsgleichen Anordnung nur geringfügige Abweichung tolerieren.

Die Figuren 3 a - 3 c zeigen eine Auswahl möglicher Beispiele von Schnittlinien zur Bildung der schlitzförmigen Öffnungen 18 A, 18 B.

In Fig. 3 a sind die Siegelnahtbereiche 20 A, 20 B mit in Längsrichtung verlaufenden und sich bei Überlappung mehrfach überschneidenden Wellenlinien 28 A, 28 B als schlitzförmige Öffnungen ausgestattet. Anstelle von je einer Wellenlinie ist auch eine Vielzahl von parallel angeordneten Wellenlinien, z. B. je 3 Wellenlinien, denkbar, wobei die Wellenlinien in ihrer Längsrichtung auch mehrfach unterbrochen sein können.

In Fig. 3b sind die Siegeinahtbereiche 20 A, 20 B mit einer Vielzahl von in Längsrichtung parallel verlaufenden geraden Linien 30 A, 30 B, z. B. je drei Linien, als schlitzförmige Öffnungen ausgestattet. Die Linien 30 A, 30 B können in ihrer Längsrichtung auch mehrfach unterbrochen sein.

In Fig. 3c sind die Siegelnahtbereiche 20 A, 20 B mit einer Vielzahl von in einem Winkel von z. B. 30° - 60° zur Längsrichtung verlaufenden, parallelen und sich bei Überlappung mehrfach überschneidenden Linien 32 A, 32 B als schlitzförmige Öffnungen ausgestattet. Die Linien 32 A, 32 B können in ihrer Längsrichtung auch mehrfach unterbrochen sein.

## Patentansprüche

1. Verpackungsbehälter mit wenigstens einem wenigstens drei Polymerschichten einschliesslich einer Siegelschicht (16 A, 16 B) aufweisenden Verpackungslaminat (10 A, 10 B) mit einer die Innenseite des Behälters bildenden Innenschicht (12 A, 12 B) und einer die Aussenseite des Behälters bildenden Aussenschicht (14 A, 14 B), wobei das Verpackungslaminat über wenigstens eine Siegelnaht (22) gegen sich selbst oder gegen ein weiteres Verpackungslaminat zu einem Beutel gesiegelt oder als Deckel gegen einen Rand eines aus einem Verpackungslaminat geformten Behälterteils gesiegelt ist,
**dadurch gekennzeichnet, dass**
die Innenschicht (12 A, 12 B) aus einem unter den Siegelbedingungen thermisch stabilen Polymer und die auf die Innenschicht (12 A, 12 B) folgende Schicht die aus einem unter den Siegelbedingungen thermisch siegelbaren Polymer bestehende Siegelschicht (16 A, 16 B) ist, wobei die in der Siegelnaht (22) einander gegenüberliegenden Innenschichten (12 A, 12 B) im Bereich der Siegelnaht (22) lokal geschwächt oder durchtrennt sind.

2. Verpackungsbehälter nach Anspruch 1, **dadurch gekennzeichnet, dass** das Polymer der Innenschicht (12 A, 12 B) thermisch bis über etwa 200 °C stabil und das Polymer der Siegelschicht (16 A, 16 B) unterhalb von etwa 180°C thermisch siegelbar ist.

3. Verpackungsbehälter nach Anspruch 2, **dadurch gekennzeichnet, dass** das Polymer der Innenschicht (12 A, 12 B) PET, PEN, PEEK oder oPA ist.

4. Verpackungsbehälter nach Anspruch 2, **dadurch gekennzeichnet, dass** das Polymer der Siegelschicht (16 A, 16 B) PE, PP, Copolymere der Polyolefine oder PET-G ist.

5. Verpackungsbehälter nach einem der Ansprüche 1 bis 4, **dadurch gekennzeichnet, dass** zwischen der Innenschicht (12 A und 12 B) und der Siegelschicht ( 16 A, 16B ) eine funktionelle Barriereschicht, insbesondere aus SiOₓ oder AIOx, eine Aluminiumfolie oder eine Metallisierungsschicht angeordnet ist.
